# FASCICULE DE BREVET EUROPEEN

(11) **EP 1 594 298 B1**
(45) Date de publication et mention de la délivrance du brevet: **13.06.2007**
(21) Numéro de dépôt: 05290886.0
(22) Date de dépôt: 21.04.2005
(51) Int. Cl.: H04M 3/00, H04M 3/30

(54) **Procédé de test pour équipement de ligne d'abonné muni d'un circuit hybride et appareil correspondant**
Verfahren zum Testen einer Teilnehmerleitungsschnittstelle, welche eine Hybridschaltung enthält, und entsprechende Vorrichtung
Method for testing a Subscriber Line Interface Circuit comprising a hybrid circuit and corresponding apparatus

(30) Priorité: 04.05.2004 FR 0404785
(43) Date de publication de la demande: 09.11.2005
(73) Titulaire: Alcatel Lucent, 75008 Paris (FR)
(72) Inventeur: Lantoine, Eric, 22300 Lannion (FR); Henry, Christophe, 22560 Pleumeur Bodou (FR); Duval, Jean Paul, 22300 Lannion (FR)
(74) Mandataire: Sciaux, Edmond

(56) Documents cités:
- EP-A- 0 352 040
- EP-A- 0 808 053
- EP-A- 1 107 552
- US-A1- 2002 094 077
- US-B1- 6 219 417

## Description

La présente invention se rapporte à un procédé de test pour les équipements de ligne téléphonique, plus particulièrement ceux qui comportent un réseau de résistances, notamment de type hybride, pour effectuer diverses fonctions telles que l'alimentation de la ligne téléphonique et la limitation du courant de sonnerie. Elle concerne également un équipement de ligne adapté pour mettre en oeuvre ce procédé.

Le document US 6.219.417 décrit un équipement de ligne téléphonique analogique comportant un réseau de résistances hybride et un processeur de signal, ce processeur étant utilisé en outre pour faire des tests notamment pendant l'envoi d'un signal de sonnerie sur la ligne téléphonique. Cependant il ne décrit pas de test permettant de s'assurer de l'intégrité du réseau de résistances hybride.

Le document EP 0.808.053 décrit un équipement de ligne téléphonique analogique comportant un réseau de résistances hybride et un processeur de signal, ce processeur étant utilisé en outre pour faire des tests. Il décrit comment isoler l'équipement de la ligne téléphonique, sans utiliser de relais, pendant des tests sur l'équipement. Il décrit un test permettant de s'assurer de l'intégrité du réseau de résistances hybride. Le processeur de signal fournit à un codec un signal de test, sous forme numérique, à une fréquence 1 Khz. Le signal de test est converti en signal analogique par le codec, puis est injecté dans le réseau de résistances hybride. Le signal réfléchi par le réseau hybride est amplifié par l'amplificateur de réception de signal téléphonique, puis son amplitude est mesurée par le processeur de signal. Elle dépend de la charge présente sur chacun des fils de la ligne téléphonique et de l'état du réseau de résistances hybride. Si celui-ci comporte une résistance coupée, le signal réfléchi a alors une amplitude supérieure à un seuil fixé, et le processeur déclenche une alarme. Ce procédé de test a pour inconvénient de n'être applicable que sur un équipement comportant un processeur de signal. Or un tel processeur augmente beaucoup le coût d'un équipement de ligne téléphonique.

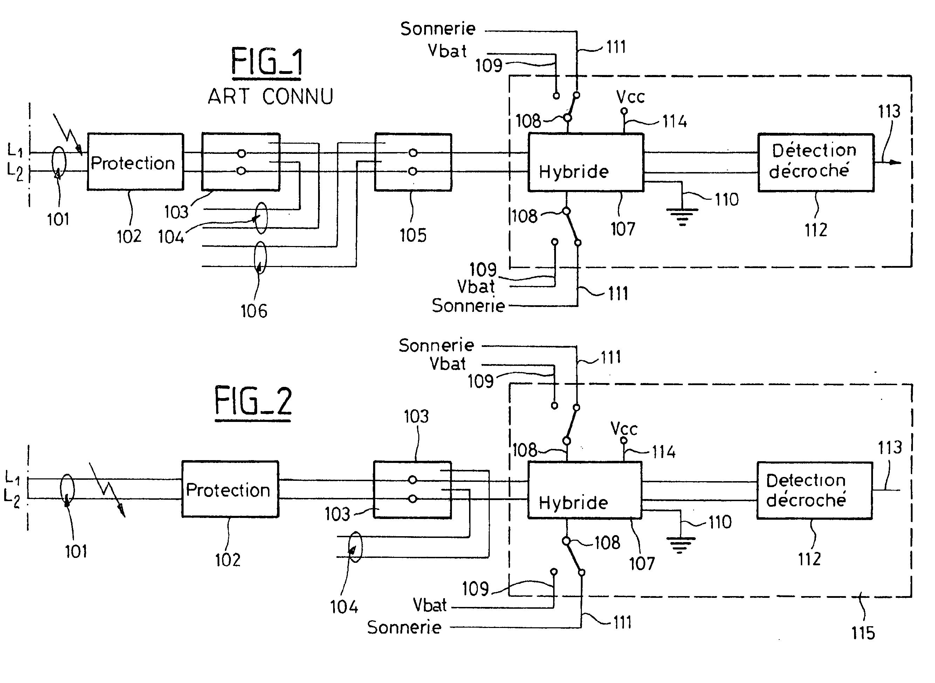

On a représenté sur la **figure 1** un équipement de ligne classique destiné à être raccordé par une ligne téléphonique 101 à un poste téléphonique de base, c'est à dire qui fonctionne sur une ligne analogique ordinaire, par opposition aux nouveaux systèmes du type RNIS ou ADSL par exemple. Les lignes et les organes destinés à transmettre et à recevoir les signaux vocaux entre cet équipement et l'autocommutateur sont connus et n'ont pas été représentés pour simplifier la figure et parce qu'ils n'interviennent pas dans l'invention.

La ligne téléphonique est raccordée en entrée de l'équipement de ligne à un dispositif de protection contre les surtensions 102, de type connu. Ce dispositif 102 est raccordé à un relais de test de ligne 103. Ce relais permet d'isoler l'équipement de ligne de la ligne téléphonique, pour raccorder celle-ci à un bus de test de ligne 104.

Un second relais de test d'équipement 105 permet de tester le fonctionnement de l'équipement de ligne, notamment la fonction décroché/raccroché, et plus particulièrement l'intégrité du réseau de résistances hybride 107, en isolant l'entrée du réseau 107 pour le raccorder à un bus de test d'équipement 106. En dehors de ces périodes de test, ce relais 105 relie donc la ligne, depuis le relais 103, à l'entrée du réseau hybride 107.

Ce réseau hybride 107, dont la structure détaillée sera décrite plus loin, est raccordé par l'intermédiaire d'un relais de sonnerie 108 soit à un circuit d'alimentation 109, soit à un circuit de sonnerie 111. Dans cet exemple de représentation, ce circuit 109 est raccordé aux deux circuits de commutation de ce relais, et correspond pour l'un, au - de l'alimentation Vbat, et pour l'autre, au + de cette alimentation. Toutefois, de manière connue, le - est le point chaud et le + est raccordé à la masse générale 110.

Les commandes de ces divers relais sont connues et ne sont donc pas représentées sur la figure.

La sortie du réseau hybride 107 est reliée à un circuit 112 de détection du décrochage, ou du raccrochage, du poste téléphonique relié à l'équipement de ligne. Une tension Vcc, appliquée au réseau hybride 107 par une connexion 114, permet d'obtenir une tension de polarisation servant au fonctionnement de ce circuit 112. Lors de la détection du décrochage, le circuit 112 émet un signal logique sur une connexion de sortie 113. Lors de la détection du raccrochage, il émet un signal logique complémentaire.

L'utilisation d'un relais de test 105 pour tester le réseau hybride 107 entraîne un coût qui est d'autant plus important qu'il y a autant de relais que d'équipements de ligne et donc que de postes téléphoniques desservis par le système.

Pour diminuer ces coûts en supprimant ces relais de test, l'invention propose un procédé de test qui ne nécessite ni ce relais de test 105, ni un processeur de signal. Il est caractérisé en ce que, pour tester le réseau de résistances, il consiste, à
- isoler l'équipement de la ligne téléphonique,
- appliquer le signal de sonnerie,
- et analyser ledit signal logique, qui est composé, si le réseau de résistances est défectueux, d'une succession de 1 et de 0 à la fréquence de la composante alternative du signal de sonnerie.

L'invention propose également un autocommutateur destiné à être relié à un équipement de ligne téléphonique analogique, et comportant un calculateur de commande de cet équipement de ligne, cet équipement de ligne comprenant:
- un réseau de résistances, destiné à coupler l'équipement à une ligne téléphonique analogique,
- des moyens intercalés entre le réseau de résistances et la ligne téléphonique, permettant d'isoler l'équipement de la ligne télephonique,
- des moyens permettant d'appliquer à l'équipement un signal de sonnerie comprenant une composante alternative basse fréquence,
- et un circuit de détection de décrochage/raccrochage délivrant un signal logique de décrochage/raccrochage ;
**caractérisé** en ce que, pour permettre de tester le réseau de résistances hybride, le calculateur est programmé pour commander les moyens permettant d'isoler l'équipement de la ligne téléphonique et les moyens permettant d'appliquer à l'équipement un signal de sonnerie ;
et est programmé pour détecter si ledit signal logique est composé d'une succession de 1 et de 0 à la fréquence de la composante alternative du signal de sonnerie.

D'autres particularités et avantages de l'invention apparaîtront clairement dans la description suivante, faite en regard des figures annexées qui représentent:
- la figure 1, le schéma simplifié d'un équipement de ligne connu;
- la figure 2, le schéma de la figure 1, modifié selon l'invention; et la figure 3, le schéma des organes de la figure 2 contenus dans le cadre pointillé 115.

On a représenté sur la **figure 2** un équipement de ligne permettant de mettre en oeuvre le procédé selon invention. On constate que cet équipement de ligne ne diffère pas substantiellement de celui représenté en figure 1, à l'exception du relais de test de fonctionnement 105, qui a été supprimé.

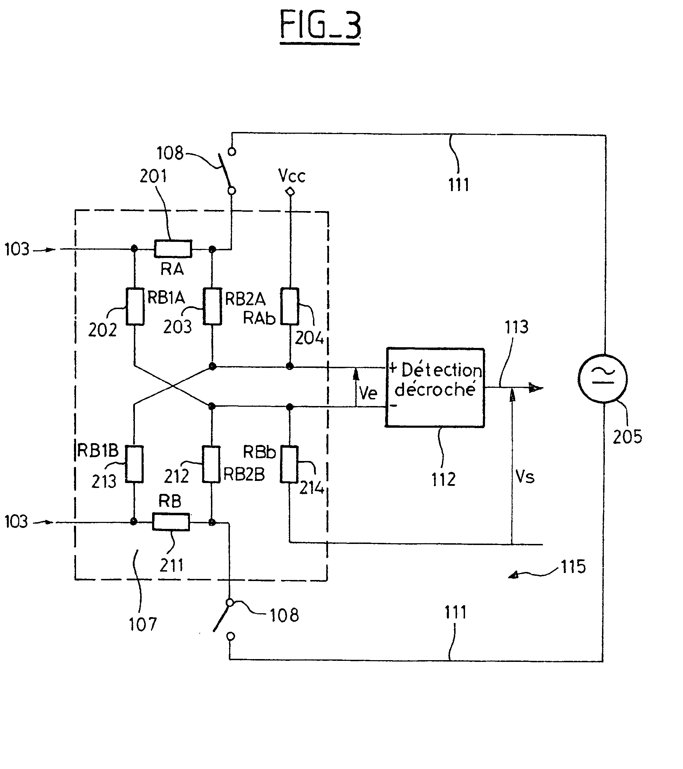

Le schéma plus détaillé des organes contenus dans le cadre pointillé 115, représenté sur la figure 3, permet d'expliquer le fonctionnement du procédé selon invention.

Le circuit hybride 107 alimente le relais 103, et donc la ligne téléphonique, par l'intermédiaire de deux résistances de limitation de courant RA 201 et RB 211, elles-mêmes alimentées par le relais de sonnerie 108. Pour la simplicité du dessin le circuit d'alimentation 109 n'a pas été représenté.

Un pont, formé de deux résistances RB1A 202 et RB2B 212 en série entre l'entrée de RA et la sortie de RB, et de deux résistances RB2A 203 et RB1B 213 en série entre la sortie de RA et l'entrée de RB, permet de déterminer le sens du courant de polarisation, qui indique, de manière connue, l'état décroché ou raccroché du poste téléphonique raccordé à l'équipement de ligne. Pour cela, les points milieux des deux branches du pont sont raccordés aux entrées + et - d'un comparateur formant l'organe essentiel du circuit de détection de décrochage 112 dont la sortie 113 délivre une tension Vs. Cette tension bascule entre 0 et X Volts lorsque la tension d'entrée Ve du comparateur change de sens, ce qui correspond à l'émission d'un signal logique 1 ou 0 suivant le cas. En outre une première résistance de polarisation RAb 204 relie une source d'alimentation Vcc au point milieu des résistances RB2A et RB1 B, et deuxième résistance de polarisation RBb 214 relie le point milieux des résistances RB1A et RB2B à la masse. Ceci permet de fixer la tension Ve à une valeur minimale pour que le comparateur 112 ne présente pas d'instabilité.

Pour que l'ensemble fonctionne correctement, les valeurs des différentes résistances obéissent aux relations suivantes :
RA = RB << RAb = RBb << RB1A = RB1B = RB2A = RB2B

Pour tester l'équipement de ligne, et plus particulièrement son circuit hybride, l'invention propose de déconnecter l'équipement de la ligne par l'intermédiaire du relais 103, puis de lui appliquer un signal de sonnerie par l'intermédiaire du relais 108 depuis un générateur de signal de sonnerie 205. Cette opération s'effectue par simple programmation du calculateur de commande de l'autocommutateur auquel est relié l'équipement de ligne.

Le signal de sonnerie appliqué sera de préférence un signal comprenant de manière connue une composante continue de -52 V sur laquelle est superposée une composante alternative basse fréquence de 80 Veff.

Quand les résistances du circuit hybride sont à leur valeur nominale, la composante alternative basse fréquence ne génère sur l'entrée du circuit 112 qu'une tension alternative résiduelle de faible amplitude, de l'ordre de quelques mV. Cette composante est nettement inférieure à la valeur de la tension de polarisation Ve, ce qui ne permet pas de faire basculer le comparateur contenu dans le circuit 112.

Si par contre l'une quelconque des résistances RB1A, RB2A, RB1B ou RB2B du circuit hybride 107 présente une défectuosité, que ce soit une coupure, un court-circuit ou une variation importante de sa valeur, la valeur de la composante alternative superposée à Ve dépasse la valeur de cette tension de polarisation initiale, ce qui entraîne un basculement du comparateur du circuit 112 à la fréquence de la composante alternative du signal de sonnerie. Le circuit 112 émet donc un signal logique composé d'une succession de 1 et de 0 à la fréquence de cette composante alternative, indiquant la détection d'une telle défectuosité. En ce qui concerne les résistances RA et RB, ce système permet également de détecter une coupure ou une augmentation très importante de leurs valeurs.

Ce signal logique est totalement différent du signal logique correspondant à une opération de décroché ou de raccroché, qui, lorsqu'il est établi, est un signal stable sans transition. Le calculateur de commande de l'autocommutateur auquel est relié l'équipement de ligne peut donc très facilement, en détectant cette séquence, déterminer que le circuit hybride de cet équipement de ligne est défectueux. Cette détection s'effectuera là aussi par simple programmation de ce calculateur.

L'invention permet donc pour chaque équipement de ligne de supprimer le relais de test 105 ainsi que le bus et son électronique associée, au prix de quelques lignes de programmation ajoutées dans le programme du calculateur de l'autocommutateur auquel sont reliés tous les équipements de ligne.

L'invention est applicable aussi aux équipement de ligne dans lesquels les relais sont remplacés par des circuits de commutation à semiconducteurs.

## Revendications

1. - Procédé de test pour équipement de ligne téléphonique analogique, cet comprenant:
- un réseau de résistances (107), destiné à coupler l'équipement à une ligne téléphonique analogique (101).
- des moyens (103), intercalés entre le réseau de résistances (107) et la ligne téléphonique (101), permettant d'isoler l'équipement de la ligne téléphonique,
- des moyens (108) permettant d'appliquer à l'équipement un signal de sonnerie (205) comprenant une composante alternative basse fréquence,
- et un circuit de détection de décrochage/raccrochage (112) délivrant un signal logique (Vs) de décrochage/raccrochage,
**caractérisé en ce que**, pour tester le réseau de résistances (107), il consiste, à:
- isoler l'équipement de la ligne téléphonique,
- appliquer le signal de sonnerie,
- et analyser ledit signal logique, qui est composé, si le réseau de résistances (107) est défectueux, d'une succession de 1 et de 0 à la fréquence de la composante alternative du signal de sonnerie.

2. - Autocommutateur destiné à être relié à un équipement de ligne téléphonique analogique, et comportant un calculateur de commande de cet équipement de ligne, cet équipement de ligne comprenant :
- un réseau de résistances (107), destiné à coupler l'équipement à une ligne téléphonique analogique (101),
- des moyens (103), intercalés entre le réseau de résistances (107) et la ligne téléphonique (101), permettant d'isoler l'équipement de la ligne téléphonique,
- des moyens (108) permettant d'appliquer à l'équipement un signal de sonnerie (205) comprenant une composante alternative basse fréquence,
- et un circuit de détection de décrochage/raccrochage (112) délivrant un signal logique (Vs) de décrochage/raccrochage ;
**caractérisé en ce que**, pour permettre de tester le réseau de résistances hybride (107), le calculateur est programmé pour commander les moyens (103) permettant d'isoler l'équipement de la ligne téléphonique et les moyens (108) permettant d'appliquer à l'équipement un signal de sonnerie (205);
et est programmé pour détecter si ledit signal logique est composé d'une succession de 1 et de 0 à la fréquence de la composante alternative du signal de sonnerie.

## Claims

1. Test method for analogue telephone line equipment including:
- a resistor array (107) adapted to couple the equipment to an analogue telephone line (101),
- means (103) between the resistor array (107) and the telephone line (101) for isolating the equipment from the telephone line,
- means (108) for applying to the equipment a ringing signal (205) including a low-frequency alternating component, and
- an off-hook/on-hook detector circuit (112) delivering an off-hook/on-hook logic signal (Vs),
which method is **characterised in that** it consists in, to test the resistor array (107):
- isolating the equipment from the telephone line,
- applying the ringing signal, and
- analysing said logic signal which, if the resistor array (107) is defective, comprises a succession of 1 and 0 at the frequency of the alternating component of the ringing signal.

2. Local office designed to be connected to an analogue telephone line equipment, and comprising a computer for controlling this line equipment, this equipment including:
- a resistor array (107) adapted to couple the equipment to an analogue telephone line (101),
- means (103) between the resistor array (107) and the telephone line (101) for isolating the equipment from the telephone line,
- means (108) for applying to the equipment a ringing signal (205) including a low-frequency alternating component, and
- an off-hook/on-hook detector circuit (112) delivering an off-hook/on-hook logic signal (Vs),
**characterised in that**, for testing the hybrid resistor array (107), the computer is programmed to control the means (103) for isolating the equipment from the telephone line and the means (108) for applying to the equipment a ringing signal (205);
and is programmed to detect if the logic signal comprises a succession of 1 and 0 at the frequency of the alternating component of the ringing signal.

## Patentansprüche

1. - Testverfahren für die Schnittstelle einer analogen Telefonleitung, wobei diese Schnittstelle umfasst:
- eine Widerstandsschaltung (107), die dazu bestimmt ist, die Schnittstelle mit einer analogen Telefonleitung (101) zu koppeln;
- zwischen die Widerstandsschaltung (107) und die Telefonleitung (101) geschaltete Vorrichtungen (103), mit deren Hilfe die Schnittstelle von der Telefonleitung getrennt werden kann;
- Vorrichtungen (108), mit deren Hilfe ein Rufsignal (205) mit einer niederfrequenten Wechselspannungskomponente an die Schnittstelle angelegt werden kann;
- und eine Abheben/Auflegen-Erkennungsschaltung (112), die ein logisches Abheben/Auflegen-Signal (Vs) liefert;
**dadurch gekennzeichnet, dass** es zum Testen der Widerstandsschaltung (107) darin besteht:
- die Schnittstelle von der Telefonleitung zu trennen;
- das Rufsignal anzulegen;
- und das logische Signal zu analysieren, welches, wenn die Widerstandsschaltung (107) defekt ist, aus einer Folge von 1en und 0en mit der Frequenz der Wechselspannungskomponente des Rufsignals besteht.

2. - Wählvermittlungsstelle, dafür bestimmt, mit der Schnittstelle einer analogen Telefonleitung verbunden zu werden, und umfassend einen Steuerungsrechner dieser Leitungsschnittstelle, wobei diese Leitungsschnittstelle umfasst:
- eine Widerstandsschaltung (107), die dazu bestimmt ist, die Schnittstelle mit einer analogen Telefonleitung (101) zu koppeln;
- zwischen die Widerstandsschaltung (107) und die Telefonleitung geschaltete Vorrichtungen (103), mit deren Hilfe die Schnittstelle von der Telefonleitung (101) getrennt werden kann;
- Vorrichtungen (108), mit deren Hilfe ein Rufsignal (205) mit einer niederfrequenten Wechselspannungskomponente an die Schnittstelle angelegt werden kann;
- und eine Abheben/Auflegen-Erkennungsschaltung (112), die ein logisches Abheben/Auflegen-Signal (Vs) liefert;
**dadurch gekennzeichnet, dass**, um das Testen der Hybrid-Widerstandsschaltung (107) zu ermöglichen, der Rechner so programmiert ist, dass er die Vorrichtungen (103) steuert, mit deren Hilfe die Schnittstelle von der Telefonleitung getrennt werden kann, sowie die Vorrichtungen (108), mit deren Hilfe ein Rufsignal (205) an die Schnittstelle angelegt werden kann;
und dass er so programmiert ist, dass er erkennt, ob das logische Signal aus einer Folge von 1 en und 0en mit der Frequenz der Wechselspannungskomponente des Rufsignals zusammengesetzt ist.
